Europäisches Patentamt

European Patent Office

Office européen des brevets

(19)

(11) Veröffentlichungsnummer: **0 009 587**

**A1**

(12) # EUROPÄISCHE PATENTANMELDUNG

(21) Anmeldenummer: **79103026.5**

(22) Anmeldetag: **20.08.79**

(51) Int. Cl.³: **B 25 J 11/00**
**F 15 B 15/22**

(30) Priorität: **31.08.78 CH 9172/78**

(43) Veröffentlichungstag der Anmeldung:
**16.04.80 Patentblatt 80/8**

(84) Benannte Vertragsstaaten:
**AT BE DE FR GB IT NL SE**

(71) Anmelder: **ROBITRON AG**
**Werkstrasse 13**
**CH-8222 Beringen(CH)**

(72) Erfinder: **Zingel, Heinz**
**Zimmerberg 24**
**CH-8222 Beringen(CH)**

(72) Erfinder: **Brülisauer, Hans**
**Fotschengasse 307**
**CH-8215 Hallau(CH)**

(74) Vertreter: **Petschner, Goetz**
**Patentanwaltsbüro G. Petschner Seidengasse 18**
**CH-8001 Zürich(CH)**

(54) **Antriebsvorrichtung einer Linear-Einheit für Industrie-Roboter.**

(57) Die Antriebsvorrichtung einer Linear-Einheit umfasst ein hydraulisches Kolben-Zylinder-System, dessen Zylinder (11) an seinem druckseitigen Ende eine mit Bremsflüssigkeit gefüllte Dämpfungskammer (14) bildet, welche über einen durch ein Rückschlagventil (20,21) verschlossenen Kanal (18,19) mit dem Strömungssystem (13,) der Antriebsflüssigkeit in Strömungsverbindung steht, wobei der Innenmantel der Dämpfungskammer (14) und der Aussenmantel des eingetauchten Endes (30) des Kolbens (10) einen Ringkanal (31) begrenzen, dessen Form und Grösse ein Mass für die Dämpfungskennlinien des Kolben-Zylinder-Systems ist. Dadurch ist eine sehr einfache, integrierte, baukastensystemgerechte Dämpfung erreicht.

./...

*Fig.1*

*Fig. 2*

Antriebsvorrichtung einer Linear-
Einheit für Industrie-Roboter

---

Die vorliegende Erfindung betrifft eine Antriebsvorrichtung einer Linear-Einheit mit einem hydraulischen
Kolben-Zylinder-System, für Handhabungsgeräte, insbesondere im Baukastensystem zusammengefügte Industrie-
Roboter.

Handhabungsgeräte bzw. sogenannte Industrie-Roboter
sind Geräte mit mehreren Freiheitsgraden der Bewegung,
welche einen oder mehrere Arme besitzen, die mit Greifern oder Werkzeugen ausgerüstet werden können. Ein wesentliches Bauteil ist hierbei die sogenannte Linear-
Einheit, welche mit einem hydraulischen Kolben-Zylinder-System angetrieben wird.

Ein solches Handhabungsgerät bzw. eine solche Antriebsvorrichtung für die Linear-Einheit ist der DT-AS 23 01
423 entnehmbar. Hierbei arbeiten jeweils zwei Antriebsvorrichtungen an der Linear-Einheit gegenläufig, was
zuverlässige Dämpfungsmittel verlangt, um ein schädliches Anschlagen des druckseitigen Ende des jeweils zurückgestellten Kolbens an der betreffenden Zylinderstirnseite zu verhindern. Hierfür sind bisher zusätzliche, aussen am System wirksame hydraulische oder mechanische Dämpfungsmittel bekannt geworden. Solche Dämpfungsmittel sind aber nicht nur kostspielig und erhöhen das Bauvolumen, sondern sie verkomplizieren auch einen baukastenartigen Aufbau der Roboter.

Es ist nun Aufgabe der Erfindung, eine Dämpfung an solchen Antriebsvorrichtungen mit wesentlich geringerem Aufwand zu verwirklichen, was erfindungsgemäss dadurch erreicht wird, dass der Zylinder an seinem druckseitigen Ende eine mit Bremsflüssigkeit gefüllte Dämpfungskammer bildet, welche über einen durch ein Rückschlagventil verschlossenen Kanal mit dem Strömungssystem der Antriebsflüssigkeit in Strömungsverbindung steht, wobei der Innenmantel der Dämpfungskammer und der Aussenmantel des eingetauchten Endes des Kolbens einen Ringkanal begrenzen, dessen Form und Grösse ein Mass für die Dämpfungskennlinie des Kolben-Zylinder-Systems ist.

Durch diese Massnahmen ist nunmehr eine sehr einfache, integrierte, baukastensystemgerechte Dämpfung erreicht, die ihre Kennlinie auch im Dauer_betrieb aufrecht erhalten kann. Die hierbei erreichbaren guten Dämpfungseigenschaften ermöglichen zudem grosse Geschwindigkeiten mit einer absolut sicheren Abbremsung des Systems in den Endlagen. Weiter wirkt sich die integrierte und somit raumsparende Konzeption der Dämpfung vorteilhaft auf das Gewicht der Anordnung aus.

Hierbei sind verschiedene bevorzugte Ausgestaltungen derart möglich, dass das zum Eintauchen in die Dämpfungskammer bestimmte Ende des Kolbens durch einen vorzugsweise auswechselbaren Zapfen gebildet ist oder dass der Innenmantel der Dämpfungskammer durch eine vorzugsweise auswechselbare Hülse gebildet ist.

Auf diese Weise ist es möglich, die Dämpfungskennlinien der Kolben-Zylinder-Systeme wechselbar zu gestalten, je nach System-Verwendung. Durch eine entsprechende Ausgestaltung des Ringkanals durch den Einsatz unterschiedlicher Formen von Dämpfungskammer und/oder Kolben kann so eine konstante, von der Eintauchtiefe des Kolbens unabhängige Dämpfungskennlinie oder eine linear oder nicht linear fallende oder steigende Dämpfungskennlinie erreicht werden.

Ferner ist es durch die integrierte Anordnung der Dämpfung nunmehr möglich, das Kolben-Zylinder-System in seiner Arbeitslänge jederzeit veränderlich auszugestalten, was dadurch erreicht werden kann, dass der Zylinder aus einer Mehrzahl miteinander verschraubbarer Zylinderabschnitte besteht, wobei zweckmässig das druckseitige Ende des Zylinders mit der Dämpfungskammer als aufwindbarer Zylinderabschnitt ausgebildet ist.

Ein wesentlicher Vorteil der Anordnung kann weiter darin gesehen werden, dass die Antriebsflüssigkeit gleichzeitig Bremsflüssigkeit und Schmiermittel ist.

Eine beispielsweise Ausführungsform des Erfindungsgegenstandes soll nachfolgend anhand der Zeichnung näher erläutert werden. Es zeigen:

Fig.1 in schaubildlicher, teilweiser Darstellung einen Industrie-Roboter mit einer Linear-Einheit mit zwei gegenläufig arbeitenden erfindungsgemässen Antriebsvorrichtungen;

Fig.2 eine erfindungsgemässe Antriebsvorrichtung im Schnitt;

Fig.3 das druckseitige Ende der Antriebsvorrichtung gemäss Fig.2, in grösserem Massstab; und

Fig.4 ein Detail der Antriebsvorrichtung gemäss Fig.2, in grösserem Massstab.

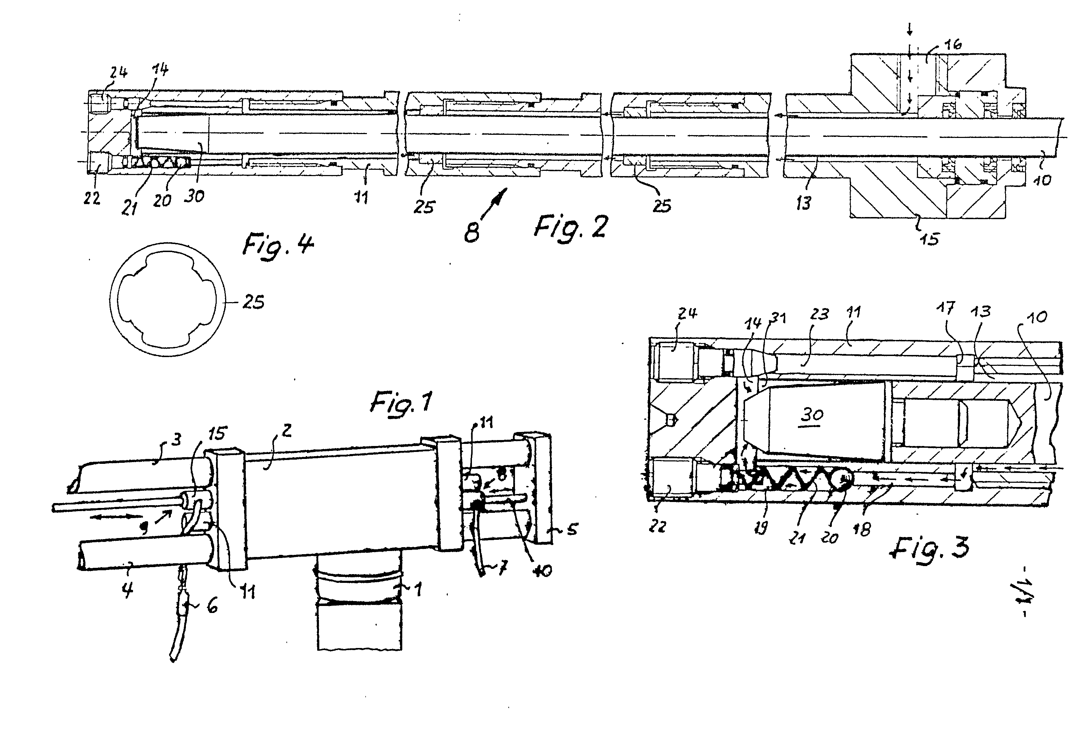

Der in Fig.1 veranschaulichte Industrie-Roboter umfasst eine auf einem Drehgestell 1 montierte Linear-Einheit mit einem Trägerblock 2 in welchem Parallel-Führungen 3 und 4 nach der einen oder anderen Seite hin verschiebbar gelagert sind. Am jeweils freien Ende (hier nur das rechte dargestellt) tragen die Parallel-Führungen 3,4 einen Flansch 5, der der Aufnahme eines Greifers, eines Werkzeuges oder dgl. dient (nicht gezeigt).

Der linearen Verschiebung der Flansche bzw. der damit verbundenen Werkzeuge dienen zwei gegenläufig arbeitende, über Zuleitungen 6' bzw. 7 mit einer nicht näher dargestellten Hydraulikquelle verbundene, gleichausgebildete Antriebsvorrichtungen 8 bzw. 9, welche hier Gegenstand der Erfindung sind und welche nachfolgend anhand der Fig.2 bis 4 näher beschrieben werden.

Gemäss den Fig.2 und 3 besteht eine solche Antriebsvorrichtung im wesentlichen aus einem, einen absatzlosen Plunger darstellenden Kolben 10, der mit seinem freien Ende am betreffenden Flansch 5 der Linear-Einheit (Fig.1) angreift und der mit seinem anderen Ende in einen Zylinder 11 eintaucht.

Der Zylinder 11 besteht aus einer Mehrzahl, hier vier miteinander verschraubter Zylinderabschnitte, von denen eine das druckseitige Ende des Zylinders bildet, welcher Abschnitt mehr im Einzelnen in Fig.3 dargestellt ist.

. Zwischen dem Mantel des Kolbens 10 und der Wandung des Zylinders 11 ist ein Ringkanal 13 gebildet, der einerseits am druckseitigen Ende des Kolben-Zylindersystems in eine Dämpfungskammer 14 ausmündet und andererseits über einen Querkanal 16 in einem Anschlusskopf 15 mit der einen oder anderen Zuleitung 6 bzw. 7 für das Antriebsmedium, das in der Regel Oel sein wird, in Verbindung steht.

Für eine einwandfreie achsenparallele Führung des Kolbens 10 im Zylinder 11 sind in diesem eine Mehrzahl Führungsringe 25 vorgesehen, deren Querschnittsfläche der Darstellung in Fig.4 entnehmbar ist. Hierbei dient das die Ringe durchströmende Antriebsmedium gleichzeitig als Schmiermittel für die Gleitflächen.

Der genannte Ringkanal 13 endet im Bereich der Dämpfungskammer 14 an einer inneren Ringschulter 17 und setzt sich bis zur Einmündung in die Dämpfungskammer 14 als achsenparalleleBohrung 18 fort, welche Bohrung 18 sich in einer erweiterten Bohrung 19 fortsetzt, in welcher eine Kugel 20 und eine Feder 21 eines Rückschlagventils untergebracht ist. Eine stirnseitige Stellschraube 22 im Zylinder 11 gestattet eine Einstellung dieses Rückschlagventils. Ferner ist der Ringkanal 13 über eine weitere achsenparallele Bohrung 23 an der Zylinderstirnseite ausmündend gestaltet, wobei die Bohrung 23 mittels einer Schraube 24 verschlossen ist, die der Einstellung der Dämpfung dient.

In der gezeigten Endlage ist das druckseitige Ende 30 des Kolbens 10 in die Dämpfungskammer 14 eingetaucht, wobei der Aussenmantel des eingetauchten Endes 30 des Kolbens 10 und der Innenmantel der Dämpfungskammer 14 einen Ringkanal 31 begrenzen, dessen Form und Grösse ein

- 6 -

Mass für die Dämpfungskennlinie des Kolben-Zylinder-Systems ist.

Beim vorliegenden Beispiel ist die Form dieses Dämpfungskanals 31 einerseits durch die achsenparallele Zylinderwandung und andererseits durch eine konische Ausgestaltung des Endes 30 des Kolbens 10 bestimmt. Zweckmässig ist hierbei dieses Ende 30 als konischer, auswechselbarer Zapfen ausgebildet.

Natürlich kann auch die Zylinderwandung auswechselbar durch Einsetzung einer nicht näher gezeigten Hülse ausgestaltet werden, um die einleitend erwähnte Möglichkeit der Aenderung der Dämpfungskennlinie des Systems herbeizuführen.

Wie aus der Darstellung ohne weiteres ersichtlich, kann sich der Kolben 10 aus seiner in den Fig.2 und 3 dargestellten Endlage nach rechts bewegen, sobald das Antriebsmedium in das Kanalsystem 16, 13, 17, 18, 19, 14 gegen die Wirkung des Rückschlagventils 20, 21 einströmt und die Stirnseite des Kolbens 10 beaufschlägt.

Bei der Rückstellung des Kolbens 10 unter der Wirkung des gegenläufig arbeitenden Kolben-Zylinder-Systems 8 bzw. 9 (Fig.1) taucht in der Endphase der Rückstellbewegung das Kolbenende 30 in die Dämpfungskammer 14 ein, wobei das durch das Rückschlagventil 20,21 am Ausströmen gehinderte Restvolumen des Antriebsmediums als Bremsflüssigkeit wirksam ist.

Die vorbeschriebene Antriebsvorrichtung bildet somit mit dem Dämpfungssystem eine auswechselbare Baueinheit für ein breites Anwendungsspektrum.

- 1 -

· Patentansprüche

1. Antriebsvorrichtung einer Linear-Einheit mit einem hydraulischen Kolben-Zylinder-System, für Handhabungsgeräte, insbesondere im Baukastensystem zusammengefügte Industrie-Roboter, dadurch gekennzeichnet, dass der Zylinder (11) an seinem druckseitigen Ende eine mit Bremsflüssigkeit gefüllte Dämpfungskammer (14) bildet, welche über einen durch ein Rückschlagventil (20,21) verschlossenen Kanal (18,19) mit dem Strömungssystem (13, 16) der Antriebsflüssigkeit in Strömungsverbindung steht, wobei der Innenmantel der Dämpfungskammer (14) und der Aussenmantel des eingetauchten Endes (30) des Kolbens (10) einen Ringkanal (31) begrenzen, dessen Form und Grösse ein Mass für die Dämpfungskennlinie des Kolben-Zylinder-Systems ist.

2. Antriebsvorrichtung nach Anspruch 1, dadurch gekennzeichnet, dass das zum Eintauchen in die Dämpfungskammer (14) bestimmte Ende (30) des Kolbens (10) durch einen vorzugsweise auswechselbaren Zapfen gebildet ist.

3. Antriebsvorrichtung nach Anspruch 2, dadurch gekennzeichnet, dass sich der Zapfen (30) zu seinem freien Ende hin konisch verjüngt.

4. Antriebsvorrichtung nach Anspruch 1, dadurch gekennzeichnet, dass der Innenmantel der Dämpfungskammer (14) durch eine vorzugsweise auswechselbare Hülse gebildet ist.

5. Antriebsvorrichtung nach Anspruch 1, dadurch gekennzeichnet, dass der Zylinder (11) aus einer Mehrzahl miteinander verschraubbarer Zylinderabschnitte besteht.

6. Antriebsvorrichtung nach Anspruch 1 und Anspruch 5, dadurch gekennzeichnet, dass das druckseitige Ende des Zylinders mit der Dämpfungskammer (14) als aufwindbarer Zylinderabschnitt ausgebildet ist.

7. Antriebsvorrichtung nach Anspruch 1, dadurch gekennzeichnet, dass der Kolben (10) über Führungsringe (25) an der Zylinderwandung abgestützt ist.

8. Antriebsvorrichtung nach Anspruch 1, dadurch gekennzeichnet, dass die Antriebsflüssigkeit gleichzeitig Bremsflüssigkeit und Schmiermittel ist.

9. Antriebsvorrichtung nach Anspruch 1, dadurch gekennzeichnet, dass die Dämpfungskennlinie durch eine das Volumen der Dämpfungskammer (14) beeinflussende Dämpfungsschraube (24) einstellbar ist.

Fig. 1

Fig. 2

Fig. 3

Fig. 4

0009587

-1/1-

Europäisches
Patentamt

**EUROPÄISCHER RECHERCHENBERICHT**

0009587
Nummer der Anmeldung
EP 79 10 3026

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| | FR - A - 2 181 525 (GRATZMULLER) <br> * Seite 5, Zeilen 5-35; Seite 7, Zeile 36 - Seite 8, Zeile 8 * <br><br> -- | 1-4,6 8 |
| | GB - A - 904 718 (BENFORD) <br> * Seite 4, Zeilen 11-86 * <br><br> -- | 1,3,8 |
| | DE - A - 2 603 041 (LICENTIA) <br> * Seite 6, Zeile 31 - Seite 7, Zeile 20 * <br><br> -- | 1 |
| D,A | DE - A - 2 301 423 (FISCHER) <br> * Insgesamt * <br><br> ---- | |

**KLASSIFIKATION DER ANMELDUNG (Int.Cl. 3)**

B 25 J 11/00
F 15 B 15/22

**RECHERCHIERTE SACHGEBIETE (Int. Cl. 3)**

B 25 J 11/00
F 15 B 15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-11-1979 | KNOPS |